# EUROPÄISCHE PATENTSCHRIFT

(11) **EP 2 132 870 B1**
(45) Veröffentlichungstag und Bekanntmachung des Hinweises auf die Patenterteilung: **11.09.2019**
(21) Anmeldenummer: 08734697.9
(22) Anmeldetag: 20.03.2008
(51) Int. Cl.: H02K 11/00, H01B 9/00, H02P 29/00, H02K 11/33, H02K 11/20

(54) **MOTORANORDNUNG**
MOTOR ARRANGEMENT
DISPOSITIF DE MOTEUR

(30) Priorität: 29.03.2007 DE 102007015102
(43) Veröffentlichungstag der Anmeldung: 16.12.2009
(73) Patentinhaber: Robert Bosch GmbH, 70469 Stuttgart (DE)
(72) Erfinder: KUNKEL, Helmut, 97859 Wiesthal (DE); BODNER, Rudolf, 97854 Steinfeld (DE)
(74) Vertreter: Thürer, Andreas
(86) Internationale Anmeldenummer: PCT/EP2008/002262
(87) Internationale Veröffentlichungsnummer: WO 2008/119477

(56) Entgegenhaltungen:
- DE-A1- 3 743 905
- DE-A1- 3 743 905
- DE-A1- 3 743 905
- DE-A1-102004 014 679
- DE-A1-102004 014 679
- DE-A1-102004 014 679
- JP-A- 2002 313 144
- JP-A- 2002 313 144
- JP-A- 2005 166 402
- JP-A- 2005 166 402
- JP-A- 2005 166 450
- JP-A- 2005 166 450
- US-A- 4 779 031
- US-A- 4 779 031
- US-A- 4 779 031
- US-A- 5 038 088
- US-A- 5 038 088
- US-A- 5 038 088
- US-A- 5 912 541
- US-A- 5 912 541
- US-A- 5 912 541
- US-B1- 7 135 827
- US-B1- 7 135 827
- US-B1- 7 135 827

## Beschreibung

Die vorliegende Erfindung bezieht sich auf eine Motoranordnung. Derartige Motoranordnungen sind aus dem Stand der Technik seit langem bekannt. Dabei ist insbesondere bekannt, dass derartige Motoranordnungen neben dem Motor selbst einen üblicherweise an dem Motor angeordneten Motorgeber sowie ein Regel- und/oder Auswertegerät aufweisen, welches die Bewegung des Motors steuert. Dieses Auswertegerät ist dabei üblicherweise über eine Leitung bzw. ein Kabel mit dem Motor verbunden. Genauer gesagt ist üblicherweise eine Vielzahl von Kabeln nötig, welche von dem Regel-/Auswertegerät zu dem Motor geführt werden, wie beispielsweise ein Leistungskabel und eine Vielzahl von Steuerkabeln bzw. Steueradern, wie beispielsweise aus der US 6,243,023 B1 bekannt.

Daneben sind auch Motorgebersysteme bekannt, wie beispielsweise aus dem Datenblatt Omron Electronics: "Omron Solutions in Motion", 30. Oktober 1998, bei denen die Geber der Motoren Positions-, Geschwindigkeits- und Beschleunigungswerte zur Steuerung des Motors nutzen. Dabei werden die jeweiligen Positions-, Geschwindigkeits- und Beschleunigungswerte ebenfalls über Steuerkabel an die Auswerteelektronik übermittelt und die Auswerteelektronik steuert in Reaktion auf die gemessenen Werte den Motor. Dadurch kommt es insgesamt zu einem sehr hohen Kabelaufwand, da üblicherweise die Leistungs-, Sensor- und Gebersignale jeweils in eigenen Kabeln verlegt werden. Genauer gesagt ist eine doppelte oder mehrfache Kabelführung nötig und auch eine doppelte bzw. erhöhte Anzahl an Steckern bzw. Kabeln. Daneben sind auch beispielsweise breitere Kabelschleppeinrichtungen in elektrischen Maschinen und ein erhöhter Einbauraum nötig.

US 4 779 031 A zeigt eine Motoranordnung, bei welcher die Steuereinrichtung in einer Einheit an dem Motor angeschlossen ist, um eine längliche Motorleitung zu vermeiden. US 5,038,088 A offenbart ein Schrittmotorsystem. US 7,135,827 B1 beschreibt einen Sägemotor-Druckpumpenkolben mit integrierter Antriebselektronik. US 5,912,541 A zeigt einen integrierten Gleichstrommotor und Steuereinrichtung. DE 10 2004 014 679 A1 zeigt auf einen Motor mit Bremse. DE 37 43 905 A1 offenbart eine elektromechanische Antriebseinrichtung. JP 2002 313144 A, JP 2005 166450 A und JP 2005 166402 A zeigen jeweils ein Kabel, das Leistungsleitungen und Steuerleitungen aufweist.

Der vorliegenden Erfindung liegt die Aufgabe zugrunde, den Verkabelungsaufwand zwischen dem Gebersystem und der Auswerteelektronik zu reduzieren und insbesondere auch die Anzahl an nötigen Steckern und Kabeln bzw. Leitungen herabzusetzen. Genauer gesagt soll insgesamt der Aufwand hinsichtlich Material und Kosten für die Kommunikation zwischen dem Gebersystem und der Auswerteelektronik reduziert werden.

Dies wird erfindungsgemäß durch eine Motoranordnung nach Anspruch 1 erreicht.

Vorteilhafte Ausführungsformen und Weiterbildungen sind Gegenstand der Unteransprüche.

Die erfindungsgemäße Motoranordnung weist einen Motor auf, an dem eine Gebereinrichtung angeordnet ist. Daneben ist eine von dem Motor räumlich getrennte Regeleinrichtung vorgesehen, welche mit dem Motor über wenigstens eine Motorleitung in Kommunikationsverbindung steht und die Motorbewegung steuert. Daneben ist wenigstens eine an dem Motor angeordnete Sensoreinrichtung vorgesehen, die wenigstens eine physikalische Eigenschaft des Motors bzw. dessen Bewegung erfasst und ein für diese physikalische Eigenschaft charakteristisches Signal ausgibt. Dabei ist die Gebereinrichtung bevorzugt über die Motorleitung mit der Regeleinrichtung verbunden, wie in Anspruch 1 beschrieben.

Erfindungsgemäß besteht zwischen der Sensoreinrichtung und der Gebereinrichtung eine direkte Kommunikationsverbindung, über welche die Sensoreinrichtung das charakteristische Signal unmittelbar an die Gebereinrichtung ausgibt.

Unter einer physikalischen Eigenschaft des Motors bzw. dessen Bewegung werden grundsätzlich alle Eigenschaften verstanden, über welche der Motor oder seine Bewegung charakterisiert werden kann, wie beispielsweise eine Temperatur des Motors, ein Drehmoment des Motors, eine Position der Rotorwelle oder Rotors und dergleichen. Auch können extern eingeleitete physikalische Größen erfasst und verarbeitet werden, wie Stöße, Vibrationen oder dergleichen.

Damit wird erfindungsgemäß das Gebersystem bzw. die Gebereinrichtung als zentrale Steuereinheit zur Auswertung von externen Sensoren verwendet. Während derzeit, wie oben erwähnt, die Signale der Sensoren und die Gebersignale jeweils in eigenen Kabeln zu der Regeleinrichtung geleitet werden, wird damit erfindungsgemäß vorgeschlagen, dass ein Teil von Signalen, beispielsweise die Auswertung von externen Sensoren über die Geberschnittstelle erfolgt. Damit müssen diese externen Sensoren nicht der von dem Motor räumlich beabstandeten Auswerteelektronik zugeführt werden. Auf diese Weise können die notwendigen Signalleitungen deutlich reduziert werden und insbesondere ist es auch möglich, die Signalleitungen direkt in Leistungskabeln zu verlegen. Die Gebereinrichtung wirkt damit erfindungsgemäß als zentrale Steuereinheit, in der Signale der einzelnen Sensoreinrichtungen zusammenlaufen. Daneben können auch Einrichtungen vorgesehen bzw. angeschlossen sein, um Informationen zur vorbeugenden Wartung zu ermitteln, auszuwerten und zu speichern.

Vorzugsweise weist die Gebereinrichtung eine Prozessoreinrichtung auf, die derart gestaltet ist, dass in Reaktion auf das von der Sensoreinrichtung übermittelte charakteristische Signal ein Ausgangssignal an die Regeleinrichtung übermittelt wird. Die Regeleinrichtung kann wiederum in Reaktion auf dieses Ausgangssignal den Motor entsprechend ansteuern. Der Verkabelungsaufwand zwischen dem Motor und der Regeleinrichtung kann damit erheblich reduziert werden.

Bevorzugt weist die Motoranordnung eine Vielzahl von Sensoreinrichtungen auf, wobei die einzelnen Sensoreinrichtungen jeweils über Sensorleitungen oder einige gemeinsame Leitungen oder über gemeinsame Kommunikation mit der Gebereinrichtung verbunden sind. Damit wird bei dieser Ausführungsform die Gebereinrichtung als zentrale Steuereinheit verwendet, welche eine Vielzahl von Sensorsignalen verarbeitet.

Vorzugsweise ist die Sensoreinrichtung aus einer Gruppe von Sensoreinrichtungen ausgewählt, welche Temperatursensoreinrichtungen, Positionssensoreinrichtungen, Geschwindigkeitssensoreinrichtungen, Kraftsensoreinrichtungen, Beschleunigungssensoreinrichtungen, Kombinationen hieraus und dergleichen enthält. Mithilfe dieser unterschiedlichen Sensoreinrichtungen kann eine exakte Steuerung des Motors durchgeführt werden.

Bei einer weiteren vorteilhaften Ausführungsform steht wenigstens eine Sensoreinrichtung in bidirektionaler Kommunikationsverbindung mit der Gebereinrichtung. So ist es beispielsweise auch möglich, dass die Gebereinrichtung als zentrale Steuereinheit umgekehrt Signale an den Positionssensor oder Temperatursensor aussendet, die wiederum von diesen bei der Ausgabe von Signalen benutzt werden.

Vorzugsweise weist die Motoreinrichtung eine Bremseinrichtung auf, welche ebenfalls in Kommunikationsverbindung mit der Gebereinrichtung steht. Damit wird von der Gebereinrichtung auch diese Bremseinrichtung gesteuert, wobei umgekehrt auch die Bremseinrichtung Signale an die Gebereinrichtung übermitteln kann. Daneben kann eine Steuereinheit vorgesehen bzw. integriert sein, die beispielsweise die Bremsensignale während des Ansteuervorgangs auswertet, um Rückschlüsse auf das Verhalten der Bremseinrichtung zu ziehen. Auch ist eine ständige Überwachung beispielsweise der Bremsensignale möglich, um Defekte bereits bei ihrem Auftreten zu erkennen.

Vorzugsweise sind auch der Motor und dessen Gebereinrichtung in einem gemeinsamen Gehäuse bevorzugt auch mit den einzelnen Sensoreinrichtungen angeordnet. Auch auf diese Weise kann der Verkabelungsaufwand reduziert und gleichzeitig können auf diese Weise sichere Kabelverbindungen gewährleistet werden.

Zudem weist die Motorleitung eine äußere Abschirmung auf, wenigstens drei innerhalb dieser äußeren Abschirmung verlaufende Leistungsleitungen, die jeweils von einer elektrisch isolierenden Umhüllung umgeben sind und angeordnet sind, wie in Anspruch 1 beschrieben. Daneben ist eine Erdungsleitung vorgesehen sowie eine innerhalb der äußeren Abschirmung verlaufende Steuerleitung. Erfindungsgemäß sind innerhalb der Steuerleitung zwei Steueradern angeordnet, welche gemeinsam von einer zweiten Abschirmung umgeben sind, wobei die zweite Abschirmung und die äußere Abschirmung gegeneinander isoliert sind und wobei an der zweiten Abschirmung an wenigstens einem Ende der Verbindungsleitung eine elektrische Kontakteinrichtung angeordnet ist, welche mit der zweiten elektrischen Abschirmung in elektrisch leitender Verbindung steht.

Bevorzugt ist der Querschnitt wenigstens einer Umhüllung und/oder der Querschnitt der zweiten Abschirmung an wenigstens einem Ende der Verbindungsleitung und bevorzugt an beide Enden unregelmäßig ausgebildet. Unter unregelmäßig wird dabei verstanden, dass der Querschnitt die besagte Isolierung bzw. Abschirmung maximal eine Symmetrieachse aufweist.

Vorzugsweise weist der besagte Querschnitt wenigstens einen bezüglich der Umhüllung nach außen ragendem Vorsprung auf. Denkbar wäre jedoch auch etwa eine nach innen ragende Ausnehmung.

Damit weist erfindungsgemäß die zweite bzw. innere Abschirmung einen eigenen Kontakt bzw. einen eigenen PIN auf.

Weitere Vorteile und Ausführungsformen ergeben sich aus den beigefügten Zeichnungen.

Darin zeigen:
- Fig. 1: eine Motoranordnung nach dem Stand der Technik;
- Fig. 2: eine erfindungsgemäße Motoranordnung;
- Fig. 3: eine Darstellung zur Veranschaulichung der Arbeitsweise der erfindungsgemäßen Motoranordnung; und
- Fig. 4: einen Querschnitt einer erfindungsgemäßen elektrischen Verbindungsleitung.

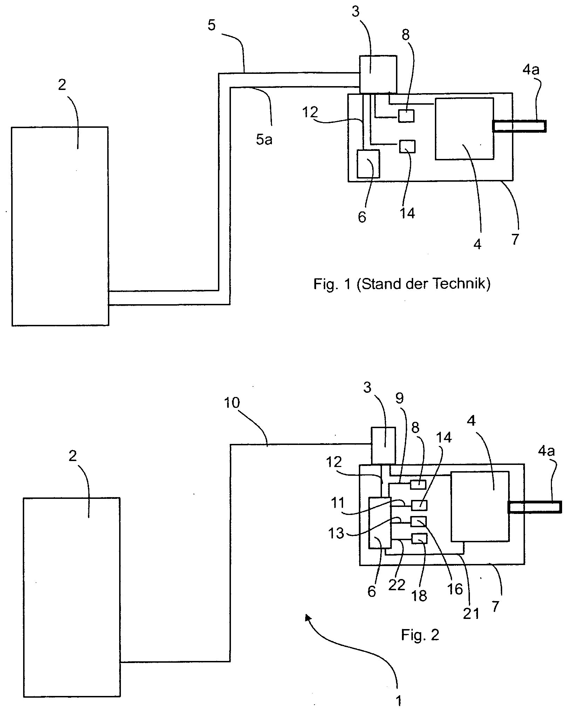

Fig. 1 zeigt eine Motoranordnung nach dem Stand der Technik. Dabei ist ein Motor 4 mit einer Abtriebswelle 4a vorgesehen, wobei der Motor 4 gemeinsam mit einem Geber 6 und Sensoreinrichtungen 8, 14 in einem gemeinsamen Gehäuse angeordnet ist.

Das Bezugszeichen 3 bezieht sich auf einen Anschluss, über den der Motor 4 und die einzelnen Einrichtungen über eine Vielzahl von Verbindungskabeln 5, 5a mit einem Regel- und Auswertegerät 2 verbunden sind, welches den Motor steuert. Dabei ist eine Vielzahl von Adern nötig, um den Motor 4 mit dem Regel-/Auswertegerät 2 zu verbinden. Im Einzelnen sind neben drei Leistungsleitungen und einer Erdungsleitung mehrere, beispielsweise vier, Steueradern nötig, um die Drehbewegung des Motors zu steuern. Daneben sind auch die einzelnen Sensoreinrichtungen jeweils zur Regelung mit der Regel-/Auswerteinheit 2 (im Folgenden als Regeleinrichtung bezeichnet) über eine Leitung 5a verbunden und auch hier ist wieder eine Vielzahl von Steueradern, beispielsweise zehn Steueradern, nötig, um alle Sensoren mit der Regel-/Auswerteeinheit zu verbinden.

Damit ist im Stand der Technik ein erheblicher Verkabelungsaufwand nötig und auch sind entsprechend aufwändige Steckverbindungen zu Verfügung zu stellen. Weiterhin stellen derartige Steckverbindungen und Kabelverbindungen eine häufige Fehlerquelle dar, da beispielsweise durch äußere Einflüsse wie Stöße die Steckkontakte belastet werden können. Auch sind derartige äußere Steckkontakte stärker den äußeren Einflüssen ausgesetzt und damit einem höheren Verschleiß unterworfen.

Fig. 2 zeigt eine erfindungsgemäße Motoreinrichtung. Man erkennt, dass hier die Gebereinheit die Funktion einer zentralen Steuereinheit übernimmt. Genauer gesagt sind die Sensoreinrichtungen 8, 14, 16 jeweils über Sensorleitungen 9, 11, 13 mit der Gebereinrichtung 6 verbunden. Damit wird der Verkabelungsaufwand zwischen dem Gebersystem und der Regeleinrichtung 2 stark vereinfacht, was zu einem Entfall von einer Vielzahl von Steckern und Kabeln bzw. Leitungen führt. Das Bezugszeichen 18 bezieht sich auf eine Bremsenansteuerung, die ebenfalls über eine Verbindungsleitung 22 mit der Gebereinrichtung 6 kommuniziert. Die Motorleitung 10 kann damit erfindungsgemäß wesentlich einfacher ausgeführt werden als im Stand der Technik. Genauer gesagt ist es möglich, in der Motorleitung 10 sowohl die Leistungskabel als auch die Erdungsleitung als auch zwei Steueradern zu führen. Die Gebereinrichtung ist über eine Verbindungsleitung 21 mit dem Motor 4 verbunden.

Somit ist durch die vorliegende Erfindung nur eine Leitungsverbindung (die Motorleitung 10) zwischen der Regeleinrichtung 2 und dem Motor 4 erforderlich. In der Gebereinrichtung 6 befindet sich eine Prozessoreinrichtung, welche die Eingangssignale der einzelnen Sensoreinrichtung 8, 14, 16 sowie der Bremsensteuerung 18 erfasst und ein entsprechend verarbeitetes Signal an die Regeleinrichtung 2 weiterleitet. Dieses Signal kann dabei über die Motorleitung 10 bzw. eine der Steueradern in der Motorleitung 10 übertragen werden. In Reaktion auf diese Signale kann wiederum die Regeleinrichtung 2 den Motor steuern, was ebenfalls über die Motorleitung 10 bzw. eine der Steueradern innerhalb dieser Motorleitung erfolgt. Das Bezugszeichen 12 kennzeichnet eine Verbindungsleitung zwischen der Gebereinrichtung und dem Anschluss. Diese Verbindungsleitung kann, insbesondere bei sehr kurzen Wegstrecken auch in Form eines Verbindungskontakts bestehen.

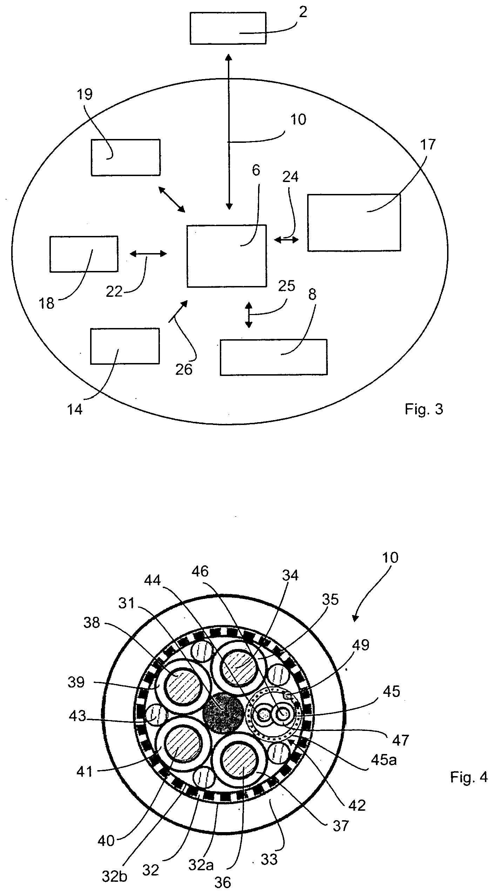

Fig. 3 zeigt eine schematische Darstellung der der Erfindung zugrunde liegenden Idee. Dabei kommuniziert die Gebereinrichtung 6 als zentrale Steuereinheit, beispielsweise über eine bidirektionale Verbindungsleitung 23 mit der Bremsenansteuerung 18. Über eine weitere bidirektionale Verbindungsleitung 24 können bestimmte Motordaten, wie beispielsweise die Position des Rotors, eine Geschwindigkeit oder eine Beschleunigung an die zentrale Steuereinheit 6 weitergegeben werden.

Das Bezugszeichen 8 bezieht sich auf einen Temperatursensor für die Motortemperatur. Einerseits können über eine bidirektionale Verbindungsleitung 25 Temperaturdaten an die Gebereinrichtung 6 übermittelt werden, andererseits ist es jedoch auch möglich, Signale von der Gebereinrichtung an den Temperatursensor 8 zu übermitteln, damit dieser wiederum auf den Motorbetrieb Einfluss nehmen kann. Dabei können auch mehrere Temperatursensoren zur Überwachung des Motors eingesetzt und deren Signale ausgewertet werden.

Das Bezugszeichen 14 bezeichnet einen weiteren Sensor bzw. eine Vielzahl von weiteren Sensoren, welche Signale über eine undirektionale Verbindung 26 an die Gebereinrichtung 6 übermitteln. Das Bezugszeichen 19 steht stellvertretend für mögliche weitere Sensoren oder Ausgabeeinrichtungen, die zur Steuerung des Motors und/oder externer Einrichtungen verwendet werden können. Daneben kann die erfindungsgemäße Vorrichtung auch eine Speichereinrichtung aufweisen, welche relevante Motordaten beispielsweise eine bestimmte Temperatur zu einem bestimmten Zeitpunkt erfasst bzw. protokolliert.

Fig. 4 zeigt stark schematisiert einen Querschnitt eines erfindungsgemäßen Leitungskabels (bzw. der Motorleitung) 10. Innerhalb dieses Leitungskabels sind drei Leistungsleitungen 34, 36, 38 zur Versorgung des Motors vorgesehen. Diese Leistungsleitungen sind jeweils mit isolierenden Umhüllungen 35, 37, 39 umgeben. Das Bezugszeichen 40 bezieht sich auf eine Erdungsleitung, die ebenfalls von einer Umhüllung 41 umgeben ist. Neben diesen besagten Leistungsleitungen weist die Verbindungsleitung auch eine Steuerleitung 42 auf. Innerhalb dieser Steuerleitung 42 befinden sich zwei Steueradern 44 und 46, die von einer zweiten Abschirmung 45, bevorzugt einer metallischen Abschirmung, wie einem verzinnten Kupfergeflecht, umgeben sind. Diese zweite Abschirmung 45 ist von einer bevorzugt doppelt aufgebrachten Myloarfolie umgeben.

Sämtliche Leitungen sind von einer ersten Abschirmung 32, welche bevorzugt ebenfalls aus einem verzinntem Kupfergeflecht besteht, umgeben. Die Bezugszeichen 32a und 32b beziehen sich auf Bandierungen, die an der ersten Abschirmung 32 angebracht sind.

Das Bezugszeichen 33 bezieht sich auf einen Außenmantel des Leitungskabels 10. Das Bezugszeichen 31 bezeichnet ein Kernmonofil und das Bezugszeichen 43 weitere Monofile, welche zwischen den einzelnen Leitungen angeordnet sind

Die beiden Steueradern 44, 46 sind jeweils von einer umhüllenden Isolierung 47 umgeben und miteinander verdrillt.

Daneben kann zwischen der ersten Abschirmung 32 und der zweiten Abschirmung 45 eine weitere (nicht gezeigte) isolierende Umhüllung vorgesehen sein, welche die zweite Abschirmung 45 umgibt. Diese weitere isolierende Umhüllung weist dabei bevorzugt ein nicht kreisförmiges Profil auf, um in eine entsprechend angepasste Kupplung eingeschoben werden zu können. Durch diese Kodierung kann ein falsches Einstecken der Verbindungsleitung in den Motor verhindert werden. Auch kann durch diese weitere isolierende Umhüllung im Isolierkörper bereits gewährleistet werden, dass das Kabel selbst korrekt an einen Stecker angeschlossen wird. Besonders bevorzugt weist diese (nicht gezeigte) weitere isolierende Umhüllung einen nach außen oder nach innen ragenden Vorsprung auf, der zur Kodierung dient.

Das Bezugszeichen 49 bezieht sich auf einen PIN bzw. eine Kontaktstelle, mit der auch die zweite Abschirmung 45 an dem Motor angeschlossen werden kann. Damit weist das in Figur 4 gezeigte Leitungskabel 10 insgesamt acht oder neun PINs bzw. Kontakte auf, die in eine entsprechende Kupplung eingeführt werden. Neben den drei Leistungsleitungen 34, 36, 38 und der Erdungsleitung 40 weisen auch die beiden Steueradern 44, 46 Anschlüsse bzw. PINs auf. Ein weiterer Anschluss ist durch den Anschluss 49 gegeben und ein letzter Anschluss ist direkt die erste Abschirmung 32, die beispielsweise auf das Gehäuse eines metallischen Steckers führen kann.

Weiterhin wäre es auch möglich, die Isolierungen 35, 37 oder 39 mit nicht kreisförmigen Querschnitten bzw. Kodierungen zu versehen, die ein falsches Einstecken der elektrischen Leitung 10 verhindern. Die Isolierung 47 kann jedoch auch andere als die gezeigte Form aufweisen, um ein falsches Einstecken derselben zu verhindern.

Sämtliche in den Anmeldungsunterlagen offenbarten Merkmale werden als erfindungswesentlich beansprucht, sofern sie einzeln oder in Kombination gegenüber dem Stand der Technik neu sind.

### Bezugszeichenliste

- 1: Motoranordnung
- 2: Regeleinrichtung bzw. Regel-/Auswertegerät
- 3: Anschluss
- 4: Motor
- 4a: Abtriebswelle
- 5, 5a: Verbindungskabel (Stand der Technik)
- 6: Gebereinrichtung
- 7: Gehäuse
- 8: Sensoreinrichtung, Temperatursensor
- 9: Sensorleitung, direkte Kommunikationsverbindung
- 10: Motorleitung
- 11: Sensorleitung
- 12: Verbindungsleitung
- 13: Sensorleitung
- 14, 16: Sensoreinrichtung
- 15: Bremseneinrichtung
- 18: Bremsenansteuerung
- 19: weitere Sensoren
- 21: Verbindungsleitung
- 22, 24, 25: bidirektionale Verbindungsleitung
- 26: undirektionale Verbindung
- 31: Kernmonofil
- 32: erste Abschirmung
- 32a, 32b: Bandierung
- 33: Außenmantel
- 34, 36, 38: Leistungsleitung
- 35, 37, 39: isolierende Umhüllung
- 40: Erdungsleitung
- 41: Umhüllung
- 42: Steuerleitung
- 43: weiteres Monofil
- 44, 46: Steuerader
- 45: zweite Abschirmung
- 45a: Myloarfolie
- 47: umhüllende Isolierung
- 49: Anschluss

## Patentansprüche

1. Motoranordnung (1), mit einem Motor (4), an dem eine Gebereinrichtung (6) angeordnet ist, einer von dem Motor (4) räumlich getrennten Regeleinrichtung (2), welche mit dem Motor (4) über wenigstens eine Motorleitung (10) in Kommunikationsverbindung steht und die Motorbewegung steuert, wenigstens einer an dem Motor (4) angeordneten Sensoreinrichtung (8, 14, 16), die ausgestaltet ist, wenigstens eine physikalische Eigenschaft des Motors (4) zu erfassen und ein für diese physikalische Eigenschaft charakteristisches Signal auszugeben, und einer Bremsensteuerung (18), wobei die Gebereinrichtung (6) mit der Regeleinrichtung (2) verbunden ist, wobei zwischen der Sensoreinrichtung (8) und der Gebereinrichtung (6) eine direkte Kommunikationsverbindung (9) besteht, über welche die Sensoreinrichtung (8) das charakteristische Signal unmittelbar an die Gebereinrichtung (6) ausgibt, wobei sich in der Gebereinrichtung (6) eine Prozessoreinrichtung befindet, welche ausgestaltet ist, Eingangssignale der wenigstens einen Sensoreinrichtung (8, 14, 16) und der Bremsensteuerung (18) zu erfassen und ein entsprechend verarbeitetes Signal an die Regeleinrichtung (2) über die Motorleitung (10) weiterzuleiten, wobei die Motorleitung (10) aufweist eine äußere Abschirmung (32), wenigstens drei innerhalb dieser äußeren Abschirmung verlaufende Leistungsleitungen (34, 36, 38), die jeweils von einer elektrisch isolierenden Umhüllung (35, 37, 39) umgeben sind, eine Erdungsleitung (40), und eine innerhalb der äußeren Abschirmung (32) verlaufende Steuerleitung (42), wobei innerhalb der Steuerleitung (42) zwei Steueradern (44, 46) angeordnet sind, welche von einer zweiten Abschirmung (45) umgeben sind und zur Weiterleitung des verarbeiteten Signals von der Prozessoreinrichtung der Gebereinrichtung (6) an die Regeleinrichtung (2) und zur Steuerung des Motors (4) mit der Regeleinrichtung (2) vorgesehen sind, wobei die zweite Abschirmung (45) und die äußere Abschirmung (32) gegeneinander isoliert sind, wobei an der zweiten Abschirmung (45) an wenigstens einem Ende der Motorleitung (10) eine elektrische Kontakteinrichtung (49) angeordnet ist, welche mit der zweiten elektrischen Abschirmung (45) in elektrisch leitender Verbindung steht, und wobei die Motorleitung ein Kernmonofil (31) aufweist, um welches herum die wenigstens drei Leistungsleitungen (34, 36, 38), die eine Erdungsleitung (40) und die eine Steuerungsleitung (42) angeordnet sind.

2. Motoranordnung nach Anspruch 1, **dadurch gekennzeichnet, dass**
die Prozessoreinrichtung derart gestaltet ist, dass in Reaktion auf das von der Sensoreinrichtung übermittelte charakteristische Signal ein Ausgangssignal an die Regeleinrichtung (2) übermittelt wird.

3. Motoranordnung nach wenigstens einem der vorangegangenen Ansprüche,
**dadurch gekennzeichnet, dass**
die Motoranordnung (1) eine Vielzahl von Sensoreinrichtungen (8, 14,16) aufweist, wobei die einzelnen Sensoreinrichtungen jeweils über Sensorleitungen (11, 13, 22) mit der Gebereinrichtung (6) verbunden sind.

4. Motoranordnung nach wenigstens einem der vorangegangenen Ansprüche,
**dadurch gekennzeichnet, dass**
die Sensoreinrichtung aus einer Gruppe von Sensoreinrichtungen ausgewählt ist, welche Temperatursensoreinrichtungen, Positionssensoreinrichtungen, Geschwindigkeitssensoreinrichtungen, Kraftsensoreinrichtungen, Beschleunigungssensoreinrichtungen, Kombinationen hieraus und dergleichen enthält.

5. Motoranordnung nach wenigstens einem der vorangegangenen Ansprüche,
**dadurch gekennzeichnet, dass**
wenigstens eine Sensoreinrichtung (8, 12, 16) in bidirektionaler Kommunikationsverbindung mit der Gebereinrichtung (6) steht.

6. Motoranordnung nach wenigstens einem der vorangegangenen Ansprüche,
**dadurch gekennzeichnet, dass**
die Motoranordnung eine Bremseinrichtung (18) aufweist, welche in Kommunikationsverbindung mit der Gebereinrichtung steht.

7. Motoranordnung nach wenigstens einem der vorangegangenen Ansprüche,
**dadurch gekennzeichnet, dass**
die Motorleitung Monofile (43) aufweist, die jeweils zwischen den um das Kernmonofil angeordneten drei Leistungsleitungen (34, 36, 38), der einen Erdungsleitung (40) und der einen Steuerungsleitung (42) angeordnet sind.

8. Elektrische Verbindungsleitung nach einem der vorangehenden Ansprüche,
**dadurch gekennzeichnet, dass**
der Querschnitt wenigstens einer Umhüllung (35, 37, 39, 41, 47) wenigstens an einem Ende der Verbindungsleitung unsymmetrisch ausgeführt ist.

9. Elektrische Verbindungsleitung nach Anspruch 8,
**dadurch gekennzeichnet, dass**
der Querschnitt wenigstens einer Umhüllung (35, 37, 39, 41, 47) einen bezüglich der Umhüllung nach außen ragenden Vorsprung aufweist.

## Claims

1. Motor arrangement (1), having a motor (4) on which a signal generator device (6) is arranged, a closed-loop control device (2) which is spatially separate from the motor (4) and has a communication connection to the motor (4) via at least one motor line (10) and controls the movement of the motor, at least one sensor device (8, 14, 16) which is arranged on the motor (4) and is configured to detect at least one physical property of the motor (4) and to output a signal which is characteristic of this physical property, and a brake controller (18), wherein the signal generator device (6) is connected to the closed-loop control device (2), wherein between the sensor device (8) and the signal generator device (6) there is a direct communication connection (9) via which the sensor device (8) outputs the characteristic signal directly to the signal generator device (6), wherein in the signal generator device (6) there is a processor device which is configured to detect input signals of the at least one sensor device (8, 14, 16) and of the brake controller (18) and to pass on a correspondingly processed signal to the closed-loop control device (2) via the motor line (10), wherein the motor line (10) has an external shield (32), at least three power lines (34, 36, 38) which run within said external shield and are each surrounded by an electrically insulating sheath (35, 37, 39), an earthing line (40) and a control line (42) which runs within the external shield (32), wherein two control conductors (44, 46) are arranged within the control line (42), said control conductors (44, 46) being surrounded by a second shield (45) and being provided for passing on the processed signal from the processor device of the signal generator device (6) to the closed-loop control device (2) and for controlling the motor (4) with the closed-loop control device (2), wherein the second shield (45) and the external shield (32) are insulated from one another, wherein an electric contact device (49), which is in electrically conductive connection with the second electric shield (45) is arranged on the second shield (45) at at least one end of the motor line (10), and wherein the motor line has a core monofilament (31) around which the at least three power lines (34, 36, 38), the one earthing line (40) and the one control line (42) are arranged.

2. Motor arrangement according to Claim 1,
**characterized in that** the processor device is configured in such a way that an output signal is transmitted to the closed-loop control device (2) in reaction to the characteristic signal which is transmitted by the sensor device.

3. Motor arrangement according to at least one of the preceding claims, **characterized in that** the motor arrangement (1) has a multiplicity of sensor devices (8, 14, 16), wherein the individual sensor devices are each connected to the signal generator device (6) via sensor lines (11, 13, 22).

4. Motor arrangement according to at least either of the preceding claims,
**characterized in that**
the sensor device is selected from a group of sensor devices which contains temperature sensor devices, position sensor devices, speed sensor devices, force sensor devices, acceleration sensor devices, combinations thereof and the like.

5. Motor arrangement according to at least one of the preceding claims,
**characterized in that**
at least one sensor device (8, 12, 16) has a bidirectional communication connection to the signal generator device (6).

6. Motor arrangement according to at least one of the preceding claims,
**characterized in that**
the motor arrangement has a brake device (18) which has a communication connection to the signal generator device.

7. Motor arrangement according to at least one of the preceding claims,
**characterized in that**
the motor line has monofilaments (43) which are each arranged between the three power lines (34, 36, 38), which are arranged around the core of monofilament, the one earthing line (40) and the one control line (42) .

8. Electrical connecting line according to one of the preceding claims,
**characterized in that**
the cross section of at least one sheath (35, 37, 39, 41, 47) is configured asymmetrically at least at one end of the connecting line.

9. Electrical connecting line according to Claim 8,
**characterized in that**
the cross section of at least one sheath (35, 37, 39, 41, 47) has a projection which protrudes outwards with respect to the sheath.

## Revendications

1. Dispositif de moteur (1), avec un moteur (4), sur lequel est disposé un dispositif d'émetteur (6), un système de régulation (2) spatialement séparé du moteur (4), qui est en liaison de communication avec le moteur (4) via au moins une ligne de moteur (10) et qui commande le mouvement du moteur, au moins un système de capteurs (8, 14, 16) disposé sur le moteur (4), qui est conçu pour détecter au moins une propriété physique du moteur (4) et produire un signal caractéristique de cette propriété physique, et une commande de frein (18), dans lequel le système d'émetteur (6) est relié au système de régulation (2), dans lequel il existe entre le système de capteurs (8) et le système d'émetteur (6) une liaison de communication directe (9), par laquelle le système de capteurs (8) envoie le signal caractéristique directement au système d'émetteur (6), dans lequel il se trouve dans le système d'émetteur (6) un dispositif de processeur, qui est conçu pour détecter des signaux d'entrée dudit au moins un système de capteurs (8, 14, 16) et de la commande de frein (18) et retransmettre un signal traité de façon correspondante au système de régulation (2) via la ligne de moteur (10), dans lequel la ligne de moteur (10) présente un blindage externe (32), au moins trois conducteurs de puissance (34, 36, 38) s'étendant à l'intérieur de ce blindage externe, qui sont chacun entourés d'une gaine électriquement isolante (35, 37, 39), une ligne de mise à la terre (40), et une ligne de commande (42) s'étendant à l'intérieur du blindage externe (32), dans lequel deux fils de commande (44, 46) sont disposés à l'intérieur de la ligne de commande (42), qui sont entourés par un deuxième blindage (45) et qui sont prévus pour la retransmission du signal traité du dispositif de processeur du système d'émetteur (6) au système de régulation (2) et pour la commande du moteur (4) avec le système de régulation (2), dans lequel le deuxième blindage (45) et le blindage externe (32) sont isolés l'un par rapport à l'autre, dans lequel un dispositif de contact électrique (49) est disposé sur le deuxième blindage (45) à au moins une extrémité de la ligne de moteur (10), et est en liaison de conduction électrique avec le deuxième blindage électrique (45), et dans lequel la ligne de moteur présente un monofil d'âme (31), autour duquel lesdits au moins trois conducteurs de puissance (34, 36, 38), l'unique ligne de mise à la terre (40) et l'unique ligne de commande (42) sont disposés.

2. Dispositif de moteur selon la revendication 1, **caractérisé en ce que** le dispositif de processeur est conçu de telle manière qu'en réaction au signal caractéristique transmis par le système de capteurs un signal de sortie soit transmis au système de régulation (2) .

3. Dispositif de moteur selon au moins une des revendications précédentes, **caractérisé en ce que** le dispositif de moteur (1) présente une multiplicité de systèmes de capteurs (8, 14, 16), dans lequel les systèmes de capteurs individuels sont reliés respectivement par des lignes de capteurs (11, 13, 22) au système d'émetteur (6).

4. Dispositif de moteur selon au moins une des revendications précédentes, **caractérisé en ce que** le système de capteurs est choisi parmi un groupe de systèmes de capteurs, qui contient des systèmes de capteurs de température, des systèmes de capteurs de position, des systèmes de capteurs de vitesse, des systèmes de capteurs de force, des systèmes de capteurs d'accélération, des combinaisons de ceux-ci et similaires.

5. Dispositif de moteur selon au moins une des revendications précédentes, **caractérisé en ce qu'**au moins un système de capteurs (8, 12, 16) est en liaison de communication bidirectionnelle avec le système d'émetteur (6).

6. Dispositif de moteur selon au moins une des revendications précédentes, **caractérisé en ce que** le dispositif de moteur présente un système de frein (18), qui est en liaison de communication avec le système d'émetteur.

7. Dispositif de moteur selon au moins une des revendications précédentes, **caractérisé en ce que** la ligne de moteur présente des monofils (43), qui sont disposés respectivement entre les trois conducteurs de puissance (34, 36, 38) disposés autour du monofil d'âme, l'unique ligne de mise à la terre (40) et l'unique ligne de commande (42).

8. Ligne de liaison électrique selon l'une quelconque des revendications précédentes, **caractérisée en ce que** la section transversale d'au moins une gaine (35, 37, 39, 41, 47) est de forme non symétrique au moins à une extrémité de la ligne de liaison.

9. Ligne de liaison électrique selon la revendication 8, **caractérisée en ce que** la section transversale d'au moins une gaine (35, 37, 39, 41, 47) présente une saillie pointant vers l'extérieur par rapport à la gaine.
